**Europäisches Patentamt**

**European Patent Office**

**Office européen des brevets**

(11) Veröffentlichungsnummer: **0 445 576 A2**

## (12) EUROPÄISCHE PATENTANMELDUNG

(21) Anmeldenummer: 91102382.8

(51) Int. Cl.5: **B01D 17/02**

(22) Anmeldetag: 20.02.91

(30) Priorität: 08.03.90 DE 9002726 U

(43) Veröffentlichungstag der Anmeldung:
**11.09.91 Patentblatt 91/37**

(84) Benannte Vertragsstaaten:
**AT BE CH DE ES FR GB IT LI NL SE**

(71) Anmelder: WINKELHORST TRENNTECHNIK
GMBH
Kelvinstrasse 8

W-5000 Köln 50(DE)

(72) Erfinder: **Winkelhorst, Jochen**
**Zum Landhaus 18**
**W-5000 Köln 50(DE)**

(74) Vertreter:. **Selting, Günther, Dipl.-Ing. et al**
**Patentanwälte von Kreisler, Selting, Werner**
**Deichmannhaus am Hauptbahnhof**
**W-5000 Köln 1(DE)**

(54) **Ringkammer-Abscheider.**

(57) Der Ringkammer-Abscheider weist mehrere koaxiale Ringkammern (15-19) auf, von denen einige Trennwände (21) auf den Boden (23) stoßen, während die anderen Trennwände (20) gegen eine Decke (22) stoßen. Damit Feststoffansammlungen im unteren Bereich des Abscheiders leicht entfernt werden können, ist der Boden (23) Bestandteil eines aufklappbaren Deckels (37). Der Boden (23) ist über Gleitführungen (33) und Federn (34) an einer Deckelwand (32) abgestützt, so daß er sich im Schließzustand dicht gegen eine Ringwand (29) des Gehäuses (10) und gegen die unteren Enden der unteren Trennwände (21) legt. Unterhalb des Bodens (23) befindet sich im Deckel (37) ein Aufnahmeraum (35), der seitlich von einem Teil (12a) der Gehäusewand (12) begrenzt ist. Die Austrittsöffnung (36) für die schwere Fraktion befindet sich fest am Gehäuse (10).

FIG.1

Die Erfindung betrifft einen Ringkammer-Abscheider der im Oberbegriff des Anspruchs 1 angegebenen Art.

Derartige Ringkammer-Abscheider, die bekannt sind aus DE-GM 88 09 056, werden vornehmlich als Ölabscheider eingesetzt. Das zu trennende Flüssigkeitsgemisch, beispielsweise ölverunreinigtes Wasser, wird von einer Pumpe in den Abscheider eingeführt. Im Inneren des Gehäuses des Abscheiders befinden sich Trennwände, welche konzentrische Ringkammern bilden. Die Trennwände der Ringkammern stoßen alternierend an eine Decke und gegen einen Boden. Auf diese Weise ergibt sich für die in das Gehäuse eingeführte Rohflüssigkeit im Inneren des Gehäuses ein meanderförmiger Weg, wobei die Flüssigkeit abwechselnd um die unteren und die oberen Enden der Trennwände herum umgeleitet wird, um schließlich in die Zentralkammer zu gelangen. Jede der Ringkammern steht an ihrem oberen Ende mit dem Kopfraum des Gehäuses in Verbindung, in welchem sich die leichte Fraktion (Öl) ansammelt, während die schwere Fraktion (Wasser) in die nächstfolgende innenliegende Ringkammer gedrückt wird. Die Zentralkammer ist am unteren Ende mit dem Auslaß für die schwere Fraktion verbunden. Durch die kaskadenartig erfolgende Dichtetrennung der beiden Fraktionen erhält man eine gute Abscheidung der leichten von der schweren Fraktion. Der bekannte Ringkammer-Abscheider arbeitet störungsfrei und weitgehend wartungsfrei, wenn ihm ausschließlich die aufzuspaltende Rohflüssigkeit zugeführt wird. Häufig kommt es jedoch vor, daß diese Rohflüssigkeit Festkörperbestandteile, z.B. Metallspäne, enthält, wie dies beispielsweise bei Kühlemulsionen für die spanende Werkstückbearbeitung der Fall ist. Solche Feststoffe, zu denen auch Sand gehören kann, sammeln sich im unteren Bereich des Ringkammer-Abscheiders an, wobei die die Ringkammern verbindenden Umlenkbereiche verstopfen können. Hinzu kommt noch, daß solche Festkörperbestandteile durch Anlagerung von Öl leicht verklumpen und eine Barriere bilden können, die die ordnungsgemäße Funktion des Abscheiders beeinträchtigt. Bei den bekannten Ölabscheidern ist eine Beseitigung der Feststoffansammlungen in der Regel nur dadurch möglich, daß das Gehäuse geöffnet und der gesamte Ölabscheider zerlegt wird.

Der Erfindung liegt die Aufgabe zugrunde, einen Ringkammer-Abscheider der im Oberbegriff des Anspruchs 1 angegebenen Art zu schaffen, der auch für die Behandlung von Feststoff enthaltenden Rohflüssigkeiten geeignet ist und der auf einfache Weise gewartet werden kann.

Die Lösung dieser Aufgabe erfolgt erfindungsgemäß mit den im Anspruch 1 angegebenen Merkmalen.

Der erfindungsgemäße Ringkammer-Abscheider hat im unteren Bereich einen abnehmbaren Deckel, an dem der Boden, auf dem einige Trennwände aufsitzen, angebracht ist. Durch Abnehmen des Deckels kann der Boden entfernt werden, wobei Feststoffansammlungen, die sich auf dem Boden gebildet haben, leicht entfernt werden können. Durch das bei abgenommenem Deckel unten offene Gehäuse sind auch die unteren Enden sämtlicher Trennwände leicht zugänglich, so daß auch diesen Trennwänden anhaftendes Material leicht entfernt werden kann. Im Rahmen der Erfindung liegt es auch, daß der Boden zugleich den Deckel bildet. In diesem Fall ist es aber normalerweise erforderlich, daß die Austrittsöffnung, an der die schwere Fraktion aus dem Gehäuse austritt, im Boden angebracht wird. Bei abnehmbarem Boden müßte der Anschluß der Austrittsöffnung über eine flexible Leitung (einen Schlauch) erfolgen, was häufig unerwünscht ist.

Gemäß einer vorteilhaften Weiterbildung der Erfindung ist der Boden an einer Deckelwand angebracht, die ihrerseits schwenkbar an dem Gehäuse des Abscheiders montiert ist. Unterhalb des Bodens besteht im Gehäuse ein Aufnahmeraum, der nach unten hin von der Deckelwand abgeschlossen wird und der seitlich von der Gehäusewand begrenzt ist. Dieser Aufnahmeraum, der mit der Zentralkammer in Verbindung steht, kann in der Seitenwand des Gehäuses die Austrittsöffnung enthalten, so daß die Austrittsöffnung an eine starre externe Verrohrung angeschlossen werden kann.

Bevor der Deckel geöffnet wird, sollte die Flüssigkeit aus dem Ringkammer-Abscheider entfernt werden. Dies kann mit einer Absaugleitung geschehen, die an den Aufnahmeraum angeschlossen ist und die ebenfalls mit dem Gehäuse starr verbunden sein kann.

Im folgenden werden unter Bezugnahme auf die Zeichnungen Ausführungsbeispiele der Erfindung näher erläutert.

Es zeigen:

Fig. 1    einen Längsschnitt durch eine erste Ausführungsform des Ringkammer-Abscheiders,

Fig. 2    eine Draufsicht von Fig. 1 und

Fig. 3    einen Längsschnitt durch eine zweite Ausführungsform.

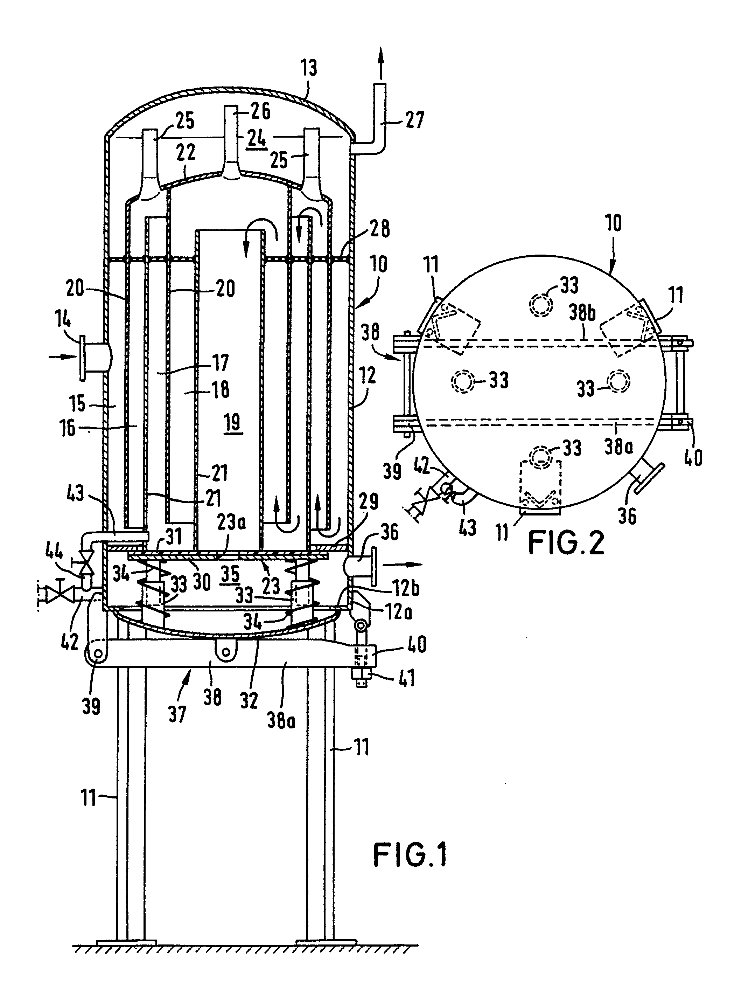

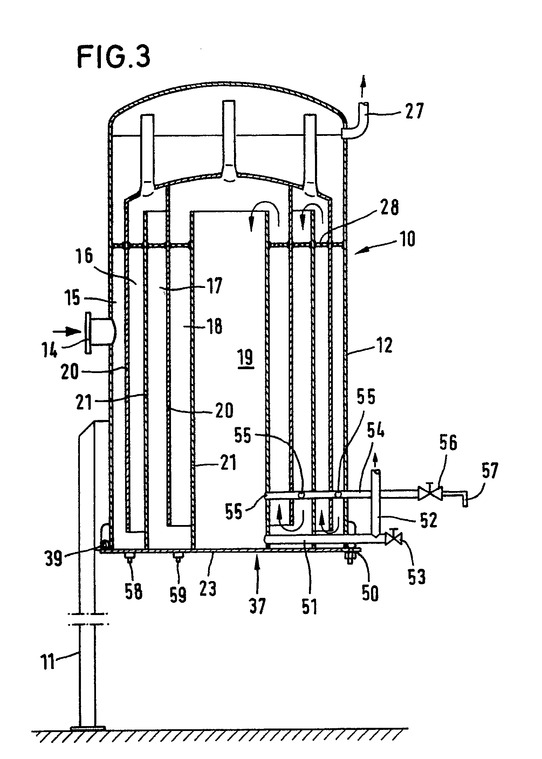

Der in den Fign. 1 und 2 dargestellte Ringkammer-Abscheider dient als Ölabscheider. Er weist ein vorzugsweise zylindrisches langgestrecktes Gehäuse 10 auf, das mit vertikaler Achse stehend angeordnet ist. Das Gehäuse 10 steht auf Füßen 11, deren obere Enden von außen her an der vertikalen Gehäusewand 12 (Umfangswand) befestigt sind.

Am oberen Ende ist das Gehäuse mit der Oberwand 13 verschlossen, die mit der Gehäusewand 12 verschweißt ist.

An der Gehäusewand 12 befindet sich etwa in halber Höhe der Einlaß 14 für die Rohflüssigkeit (Emulsion aus Öl und Wasser). Der Einlaß 14 führt tangential in das Gehäuse 10 hinein. Im Inneren des Gehäuses 10 befinden sich die koaxialen Ringkammern 15,16,17 und 18, die die Zentralkammer 19 umgeben. Die Ringkammern 15-18 und die Zentralkammer 19 sind durch ringförmige Trennwände 20 und 21 voneinander getrennt. Von diesen Trennwänden stoßen die Trennwände 20 gegen eine obere Decke 22, während sie vom unteren Boden 23 einen axialen Abstand haben. Die anderem Trennwände 21 stoßen gegen den unteren Boden 23, während sie von der oberen Decke 22 einen axialen Abstand haben.

Das obere Ende der äußeren Ringkammer 15 steht in direkter Verbindung mit dem Kopfraum 24, der zwischen der Decke 22 und der Oberwand 13 des Behälters gebildet wird. In diesen Kopfraum 24 münden Rohrstutzen 25, die von den oberen Verbindungen der Ringkammern 16 und 17 aus von der Decke 22 aufragen, sowie ein weiterer Rohrstutzen 26, der die obere Verbindung zwischen der Ringkammer 18 und der Zentralkammer 19 mit dem Kopfraum 24 verbindet. Vom Kopfraum 24 führt ein Auslaß 27 für die leichte Fraktion (Öl) nach außen.

Sämtliche Trennwände 20 und 21 sind an einer Lochplatte 28 aufgehängt, die sich quer in dem Gehäuse 10 erstreckt und an der Gehäusewand 12 befestigt ist. Die Decke 22 wird somit von der Lochplatte 28 getragen und die auf den Boden 23 stoßenden Trennwände 21 sind über die Lochplatte 28 an den gegen die Decke 22 stoßenden Trennwänden 20 sowie am Gehäuse 10 aufgehängt.

Im unteren Bereich des Gehäuses 10 befindet sich eine von der Gehäusewand 12 nach innen abstehende Ringwand 29, gegen die der Boden 23 von unten her angedrückt wird. Der Boden 23 weist eine ebene Bodenplatte 30 auf, die mit einem Dichtungsbelag 31 belegt ist. Der Dichtungsbelag 31 stößt gegen die Ringwand 29 und auch gegen die unteren Enden der Trennwände 21.

Die Gehäusewand 12 setzt sich unterhalb der Ringwand 29 in einem Teil 12a fort. Am unteren Ende des Teils 12a befindet sich ein Innenflansch 12b, gegen den der Rand der Deckelwand 32 abdichtend anliegt. Von der Deckelwand 32 ragen Gleitführungen 33 in Form von Teleskopführungen nach oben. An den oberen Enden der Gleitführungen 33 ist die Deckelplatte 23 befestigt. Die Gleitführungen 33 sind von Federn 34 umgeben, welche den Boden 23 in der Schließstellung der Deckelplatte 32 gegen die Unterseite der Ringwand 29 drücken.

Die Deckelplatte 32, der Boden 23, die Ringwand 29 und der untere Teil 12a der Gehäusewand 12 schließen den Aufnahmeraum 35 ein, der über ein Loch 23a im Boden 23 mit der Zentralkammer 19 in Verbindung steht. Aus diesem Aufnahmeraum 35 führt eine Austrittsöffnung 36, für die schwere Phase nach außen. An die Austrittsöffnung 36 kann eine feste Verrohrung angeschlossen werden.

zum Deckel 37 gehört außer der Deckelwand 32 und dem Boden 23 ein Rahmen 38, an dem die Deckelplatte 32 befestigt ist und der um ein Gelenk 39 herum aufgeklappt werden kann. Der Rahmen 38 hat zwei parallele Balken 38a,38b, die an ihrem dem Gelenk 39 abgewandten Ende mit Verriegelungsteilen 40 versehen sind, die mit Verriegelungsvorrichtung 41 der Gehäusewand 12 zusammenwirken, um den Deckel 37 in der Schließstellung festzuhalten. Die Verriegelungsvorrichtungen 41 sind schwenkbare Schraubbolzen, die in Schlitze oder Löcher der Balken 38a eingreifen.

Damit Flüssigkeit aus dem unteren Bereich des Gehäuses 10 entfernt werden kann, ist an den Aufnahmeraum 35 eine Absaugleitung 42 angeschlossen, die mit dem Teil 12a der Gehäusewand 12 starr verbunden ist. Die Absaugleitung 42 ist ferner über ein Rohr 43 und ein Ventil 44 mit dem gemeinsamen unteren Ende der beiden Ringkammern 17 und 18 verbunden, indem das Rohr 43 durch die äußere Trennwand 21 hindurchgeht. Durch das Rohr 43 kann bei geöffnetem Ventil 44 der über dem Boden 23 liegende Teil des Ringkammer-Abscheiders leergesaugt werden.

Beim Betrieb wird Rohflüssigkeit dem Einlaß 14 des Gehäuses 10 zugeführt. Die in der Rohflüssigkeit enthaltene leichte Fraktion steigt in den Kopfraum 24 hinein auf, während die schwere Fraktion absinkt und um das untere Ende der äußeren Trennwand 20 herum in die Ringkammer 16 gelangt. Dort steigt ebenfalls die leichte Fraktion in den Kopfraum 24 hinein auf, während die schwere Fraktion über das obere Ende der Trennwand 21 herum in die Ringkammer 17 gelangt. Durch Umlenkung um das untere Ende der inneren Trennwand 20 und um das obere Ende der inneren Trennwand 21 herum gelangt die schwere Fraktion in die Zentralkammer 19, während die leichtere Fraktion aufsteigt. Die schwere Fraktion fällt schließlich durch die Öffnung 23a in den Aufnahmeraum 35, von wo sie durch die Austrittsöffnung 36 abgeführt wird.

Der Boden 23 steht mit sämtlichen Trennwänden 21 in Berührung, die die anderen Trennwände 20 nach unten überragen. Wenn sich in den unteren Bereichen der Ringkammer Feststoffe angesammelt haben, deren Beseitigung erforderlich ist, wird der Einlaß abgesperrt und die im Ringkammer-Abscheider enthaltene Flüssigkeit wird durch die Absaugleitung 42 entfernt. Dann werden die Verriegelungsvorrichtungen 41 gelöst, so daß der Deckel 37 um die Schwenkachse 39 herum nach unten aufgeklappt werden kann. Die Beine 11 haben eine solche Höhe, daß der Deckel 37 vollständig aufklappen kann und den Bereich unterhalb des Gehäuses 10 freigibt, so daß ein Behälter zum Auffangen der Festkörperpartikel unter das Gehäuse gestellt werden kann. Beim Aufklappen des Deckels
37 klappt der Boden 23 mit auf. Die unteren Enden
der Trennwände sind durch die von der Ringwand
29 umschlossene Öffnung hindurch frei zugänglich.
Nach Reinigung des Geräts wird der Deckel 37
wieder hochgeklappt und die Verriegelungsvorrichtungen 41 werden geschlossen. Dabei legt sich der
Boden 23 von selbst unter die Ringwand 29 und
gegen die unteren Enden der Trennwände 21. Der
Ringkammer-Abscheider ist nunmehr von neuem
betriebsbereit.

Das Ausführungsbeispiel von Fig. 3 entspricht
weitgehend dem ersten Ausführungsbeispiel, so
daß eine nochmalige Beschreibung des generellen
Aufbaus des Ringkammer-Abscheiders nach Fig. 3
entbehrlich ist. Der Deckel 37, der das untere Ende
des Gehäuses verschließt, besteht gemäß Fig. 3
aus einem plattenförmigen Boden 23, der an einer
Seite durch ein Gelenk 39 mit dem Gehäuse 10
verbunden ist und an der gegenüberliegenden Seite mit einer lösbaren Verriegelungsvorrichtung 50
mit dem Gehäuse verbunden ist. Im geschlossenen
Zustand liegt der Boden 23 abdichtend an den
unteren Enden der Trennwände 21 an. Der Boden
23 ist vollständig geschlossen, d.h. er weist keinerlei Öffnungen auf.

Aus der Zentralkammer 19 führt seitlich eine
Auslaßleitung 51 für die Schwerephase heraus.
Diese Auslaßleitung ist mit einer nach oben führenden Steigleitung 52 verbunden und weist außerhalb
des Gehäuses 10 ein Ventil 53 auf, das zu einem
Ablauf führt, um restliche Flüssigkeit oder
Schlamm ablaufen lassen zu können. Die Auslaßleitung 51 befindet sich nahe über dem Boden 23
und sie geht abdichtend durch Löcher in den
Trennwänden 21 und in der Gehäusewand 12 hindurch.

Im Abstand über dem Boden 23 ist eine Entleerungsleitung 54 angeordnet, die im wesentlichen
horizontal verläuft und durch Löcher in sämtlichen
Wänden 20 und 21 und in der Gehäusewand 12
hindurchgeht. Die Entleerungsleitung 54 hat in den
Ringkammern 15 und 17 sowie in der Zentralkammer 19 Öffnungen 55 und sie ist außerhalb des
Behälters über ein Ventil 56 mit einem Ablauf 57
verbunden. Die Entleerungsleitung 54 dient dazu,
den Behälter 10 von Flüssigkeit zu entleeren, bevor
der Deckel 37 heruntergeklappt wird. Sie ist in
einigem Abstand über dem Boden 23 angeordnet,
um sicherzustellen, daß die Löcher 55 nicht durch
Schlamm oder Festkörper, die sich auf dem Boden
23 angesammelt haben, verstopft werden.

In dem unteren Verbindungsbereich, der die
Ringkammern 15 und 16 verbindet, und in dem unteren Verbindungsbereich, der die Ringkammern
17 und 18 verbindet, sind verschließbare Auslässe
58,59 angeordnet, um Flüssigkeit oder andere Materie vor dem Öffnen des Deckels 37 ablaufen
lassen zu können.

**Patentansprüche**

1. Ringkammer-Abscheider mit einem geschlossenen Gehäuse (10), das ineinandergeschachtelte Ringkammern (15-19) enthält, wobei die
Trennwände (20,21) zwischen den Ringkammern abwechselnd gegen einen Boden (23)
und gegen eine Decke (22) stoßen, **dadurch
gekennzeichnet,** daß der Boden (23) Bestandteil eines abnehmbaren Deckels (37) ist.

2. Ringkammer-Abscheider nach Anspruch 1, dadurch gekennzeichnet, daß der Deckel (37)
klappbar am Gehäuse (10) angelenkt ist.

3. Ringkammer-Abscheider nach Anspruch 1
oder 2, dadurch gekennzeichnet, daß der Dek-
kel (37) eine abdichtend an das Gehäuse (10)
ansetzbare Deckelwand (32) aufweist und daß
der Boden (23) bei in der Schließstellung befindlicher Deckelwand mit seinem Rand abdichtend an einer Ringwand (29) des Gehäuses (10) anliegt, wobei die Deckelwand (32),
der Boden (23) und ein Teil (12a) der Gehäusewand (12) einen Aufnahmeraum (35) begrenzen.

4. Ringkammer-Abscheider nach Anspruch 3, dadurch gekennzeichnet, daß der Aufnahmeraum
(35) über ein Loch (23a) im Boden (23) mit der
inneren Ringkammer (19) in Verbindung steht.

5. Ringkammer-Abscheider nach Anspruch 4, dadurch gekennzeichnet, daß der den Aufnahmeraum (35) begrenzende Teil (12a) der Gehäusewand (12) eine Austrittsöffnung (36) aufweist.

6. Ringkammer-Abscheider nach einem der Ansprüche 3-5, dadurch gekennzeichnet, daß der
Boden (23) an der Deckelwand (32) mit Gleitführungen (33) geführt und von mindestens
einer Feder (34) gegen die Ringwand (29) gedrückt ist.

7. Ringkammer-Abscheider nach einem der Ansprüche 3-5, dadurch gekennzeichnet, daß der
Aufnahmeraum (35) an eine Absaugleitung (42)
angeschlossen ist.

8. Ringkammer-Abscheider nach Anspruch 7, dadurch gekennzeichnet, daß mindestens eine der Ringkammern (15-19) an ihrem unteren Ende mit der Absaugleitung (42) verbindbar ist.

9. Ringkammer-Abscheider nach einem der Ansprüche 1-8, dadurch gekennzeichnet, daß die gegen den Boden (23) stoßenden Trennwände (21) an den gegen die Decke (22) stoßenden Trennwänden (20) aufgehängt sind.

10. Ringkammer-Abscheider nach einem der Ansprüche 1-9, dadurch gekennzeichnet, daß der Deckel (37) einen schwenkbar am Gehäuse (10) angebrachten Rahmen (38) aufweist, an dem die Deckelwand (32) befestigt ist und der mindestens ein mit einer Verriegelungsvorrichtung (41) des Gehäuses (10) zusammenwirkendes Verriegelungsteil (41) aufweist.

11. Ringkammer-Abscheider nach einem der Ansprüche 1-10, dadurch gekennzeichnet, daß das Gehäuse (10) so hoch angeordnet ist, daß der Deckel (37) nach unten aufklappen kann.

12. Ringkammer-Abscheider nach Anspruch 1 oder 2, dadurch gekennzeichnet, daß der Boden (23) den Deckel (37) bildet und geschlossen ausgebildet ist und daß eine Auslaßleitung (51) oberhalb des Bodens (23) seitlich aus dem Gehäuse (10) herausführt.

13. Ringkammer-Abscheider nach einem der Ansprüche 1-12, dadurch gekennzeichnet, daß eine Entleerungsleitung (54) mit Abstand über dem Boden (23) angeordnet ist, welche im Bereich der Ringkammern (15,17,19) Öffnungen (55) aufweist und absperrbar mit einem Ablauf (57) verbunden ist.

14. Ringkammer-Abscheider nach Anspruch 12, dadurch gekennzeichnet, daß für jeweils zwei Ringkammern (15,16;17,18) mindestens ein verschließbarer Auslaß (58,59) am Boden (23) vorgesehen ist.

EP 0 445 576 A2

FIG.1

FIG.2

6

# FIG.3